# EUROPEAN PATENT APPLICATION

(11) **EP 2 159 676 A1**
(43) Date of publication of application: **03.03.2010**
(21) Application number: 09010401.9
(22) Date of filing: 12.08.2009
(51) Int. Cl.: G06F 3/048

(54) **Mobile terminal and method of controlling operation of mobile terminal**

(30) Priority: 22.08.2008 KR 20080082463
(71) Applicant: LG Electronics Inc., Seoul 150-721 (KR)
(72) Inventor: Kang, Min Hun, Geumchun-ku Seoul 153-023 (KR); Lee, Na Ri, Geumchun-ku Seoul 153-023 (KR); Kim, Kang Min, Geumchun-ku Seoul 153-023 (KR); Kim, Kyoung Joung, Geumchun-ku Seoul 153-023 (KR); Kim, Jung Eun, Geumchun-ku Seoul 153-023 (KR)
(74) Representative: Katérle, Axel

(57) **Abstract**

A mobile terminal and a method of controlling the operation of the mobile terminal are provided. The method includes displaying a screen image including one or more objects on a first display unit, and if one of the objects is touched and then dragged, displaying the touched-and-dragged object on the second display unit. Therefore, it is possible to continuously display an object even in the event of a power cut by quickly moving the object from the first display unit to the second display unit.

## Description

### CROSS-REFERENCE TO RELATED APPLICATION

This application claims the priority benefit of Korean Patent Application No. 10-2008-0082463, filed on August 22, 2008 in the Korean Intellectual Property Office, the disclosure of which is incorporated herein by reference.

### BACKGROUND OF THE INVENTION

### 1. Field of the Invention

The present invention relates to a mobile terminal capable of controlling various operations using a plurality of display units having different properties and a method of controlling the operation of the mobile terminal.

### 2. Description of the Related Art

Mobile terminals are portable devices that can provide users with various services, such as a voice calling service, a video calling service, an information input/output service, and a data storage service. As the types of services provided by mobile terminals diversify, an increasing number of mobile terminals are equipped with various complicated functions, such as capturing photos or moving pictures, playing music files or moving image files, providing game programs, receiving broadcast programs and providing wireless Internet services. These mobile terminals have thus evolved into multimedia players.

Various attempts have been made to realize such complicated functions through hardware devices or software programs. For example, various user interface (UI) environments have been developed that allow users to easily search for and choose desired functions. In addition, the demand for various designs for mobile terminals, such as a double-sided liquid crystal display (LCD) or a full touch screen, has steadily grown due to a growing perception of mobile terminals as not merely functional devices, but as personal items that can represent personal individuality.

However, there is a restriction in allocating sufficient space for a UI (such as a display device or a keypad) of a mobile terminal without compromising the mobility and the portability of a mobile terminal. In addition, mobile terminals are generally required to provide high power efficiency. Therefore, it is necessary to develop ways to control the operation of a mobile terminal in a UI-based manner capable of making the most of various functions provided by a mobile terminal and improving the spatial efficiency and the power efficiency of a mobile terminal.

### SUMMARY OF THE INVENTION

A mobile terminal is provided that can improve power efficiency and can effectively control various operations using two display units, for example, a touch screen and electronic paper (e-paper).

According to an aspect of the invention, there is a method of controlling a mobile terminal. The method includes displaying an image on a first display of the mobile terminal, displaying at least one object on the first display of the mobile terminal, touching and dragging one of the at least one objects on the first display to an edge of the first display, displaying the touched and dragged object on a second display of the mobile terminal, and ceasing the display of the touched and dragged object on the first display of the mobile terminal. The at least one object relates to an operational function of the mobile terminal.

According to another aspect of the invention, there is a mobile terminal. The mobile terminal includes a main body, a first display disposed on a first surface of the main body and configured to display an image and at least one object, a second display disposed on a second surface of the main body, and a controller configured to display one of the at least one objects on the second display in response to the one of the at least one objects being touched-and-dragged to an edge of the first display. The at least one object relates to an operational function of the mobile terminal.

### BRIEF DESCRIPTION OF THE DRAWINGS

The above and other features and advantages of the present invention will become more apparent by describing in detail embodiments thereof with reference to the attached drawings in which:

FIG. 1 illustrates a block diagram of a mobile terminal according to an exemplary embodiment of the present invention;

FIG. 2 illustrates a front perspective view of the mobile terminal shown in FIG. 1;

FIG. 3 illustrates a rear perspective view of the mobile terminal shown in FIG. 1;

FIG. 4 illustrates a flowchart of a method of controlling the operation of a mobile terminal according to a first exemplary embodiment of the present invention;

FIG. 5 illustrates a flowchart of a method of controlling the operation of a mobile terminal according to a second exemplary embodiment of the present invention;

FIG. 6 illustrates a flowchart of a method of controlling the operation of a mobile terminal according to a third exemplary embodiment of the present invention;

FIG. 7 illustrates a flowchart of a method of controlling the operation of a mobile terminal according to a fourth exemplary embodiment of the present invention;

FIGS. 8A and 8B illustrate diagrams for explaining how to control the operation of the mobile terminal shown in FIG. 1 when a video call screen is displayed;

FIGS. 9A and 9B illustrate diagrams for explaining how to control the operation of the mobile terminal shown in FIG. 1 when a moving image screen is displayed;

FIGS. 10A and 10B illustrate diagrams for explaining how to control the operation of the mobile terminal shown in FIG. 1 when a multimedia play screen is displayed; and

FIGS. 11A and 11B illustrate diagrams for explaining how to control the operation of the mobile terminal shown in FIG. 1 when a map screen is displayed.

### DETAILED DESCRIPTION OF THE INVENTION

The present invention will hereinafter be described in detail with reference to the accompanying drawings in which exemplary embodiments of the invention are shown.

The term "mobile terminal," as used herein, may indicate a mobile phone, a smart phone, a laptop book computer, a digital broadcast receiver, a personal digital assistant (PDA), a portable multimedia player (PMP), or a navigation device. The terms "module" and "unit," as used herein, may be used interchangeably.

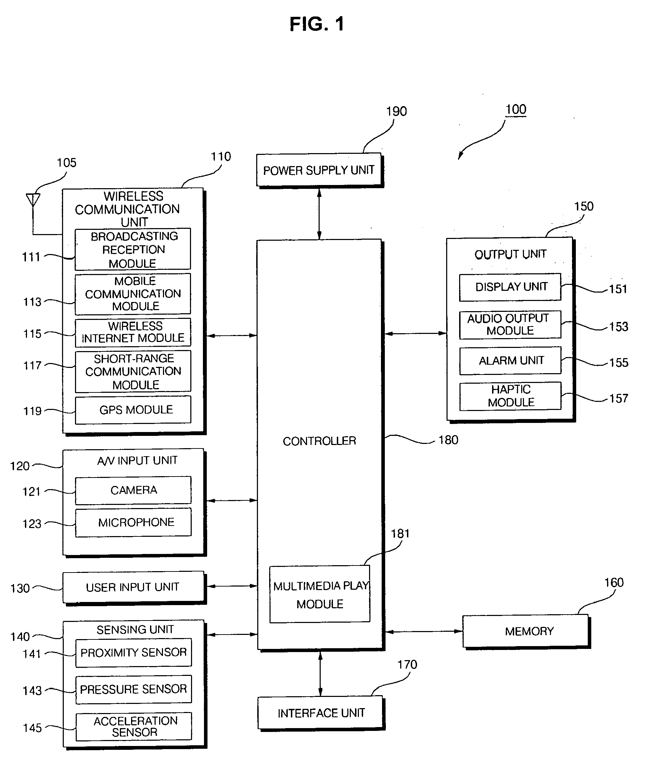

FIG. 1 illustrates a block diagram of a mobile terminal 100. Referring to FIG. 1, the mobile terminal 100 may include a wireless communication unit 110, an audio/video (A/V) input unit 120, a user input unit 130, a sensing unit 140, an output unit 150, a memory 160, an interface unit 170, a controller 180, and a power supply unit 190. Two or more of the wireless communication unit 110, the A/V input unit 120, the user input unit 130, the sensing unit 140, the output unit 150, the memory 160, the interface unit 170, the controller 180, and the power supply unit 190 may be incorporated into a single unit. Alternatively, some of the wireless communication unit 110, the A/V input unit 120, the user input unit 130, the sensing unit 140, the output unit 150, the memory 160, the interface unit 170, the controller 180, and the power supply unit 190 may be divided into two or more smaller units.

The wireless communication unit 110 may include a broadcast reception module 111, a mobile communication module 113, a wireless Internet module 115, a short-range communication module 117, and a global positioning system (GPS) module 119.

The broadcast reception module 111 receives a broadcast signal and/or broadcast-related information from an external broadcast management server through a broadcast channel. The broadcast channel may include a satellite channel or a terrestrial channel.

The broadcast management server may be a server that generates broadcast signals and/or broadcast-related information and transmits the generated broadcast signals and/or the generated broadcast-related information. The broadcast management server may also be a server that receives and then transmits previously-generated broadcast signals and/or previously-generated broadcast-related information.

The broadcast-related information may include broadcast channel information, broadcast program information and/or broadcast service provider information. The broadcast signal may be a TV broadcast signal, a radio broadcast signal, a data broadcast signal, the combination of a data broadcast signal and a TV broadcast signal, or the combination of a data broadcast signal and a radio broadcast signal.

The broadcast-related information may be provided to the mobile terminal 100 through a mobile communication network. In this case, the broadcast-related information may be received by the mobile communication module 113, rather than by the broadcast reception module 111.

The broadcast-related information may come in various forms. For example, the broadcast-related information may be an electronic program guide (EPG) of digital multimedia broadcasting (DMB) or may be an electronic service guide (ESG) of digital video broadcast-handheld (DVB-H).

The broadcast reception module 111 may receive the broadcast signal using various broadcasting systems, such as digital multimedia broadcasting-terrestrial (DMB-T), digital multimedia broadcasting-satellite (DMB-S), media forward link only (MediaFLO), DVB-H, and integrated services digital broadcast-terrestrial (ISDB-T). In addition, the broadcast reception module 111 may be configured to be suitable for nearly all types of broadcasting systems other than those set forth herein. The broadcast signal and/or the broadcast-related information received by the broadcast reception module 111 may be stored in the memory 160.

The mobile communication module 113 may transmit wireless signals to or receive wireless signals from at least one of a base station, an external terminal, and a server through a mobile communication network. The wireless signals may include various types of data according to whether the mobile terminal 100 transmits/receives voice call signals, video call signals, or text/multimedia messages.

The wireless Internet module 115 may be a module for wirelessly accessing the Internet. The wireless Internet module 115 may be embedded in the mobile terminal 100 or may be installed in an external device. The wireless Internet module 115 may use various wireless Internet techniques, such as wireless fidelity (WiFi), wireless broadband (Wibro), world interoperability for microwave access (Wimax) or high-speed downlink packet access (HSDPA).

The short-range communication module 117 may be a module for short-range communication. The short-range communication module 117 may use various short-range communication techniques, such as Bluetooth®, radio frequency identification (RFID), infrared data association (IrDA), ultra wideband (UWB), and ZigBee®.

The GPS module 119 may receive position information from a plurality of GPS satellites.

The A/V input unit 120 may be used to receive audio signals or video signals. The A/V input unit 120 may include a camera 121 and a microphone module 123.

The camera 121 processes various image frames, such as still images or moving images captured by an image sensor during a video call mode or an image capturing mode. The image frames processed by the camera 121 may be displayed by a display unit 151.

The image frames processed by the camera 121 may be stored in the memory 160 or may be transmitted outside the mobile terminal 100, such as to an external device, through the wireless communication unit 110. The mobile terminal 100 may include two or more cameras 121.

The microphone 123 receives external sound signals during a call mode, a recording mode, or a voice recognition mode with the use of a microphone and may convert the sound signals into electrical sound data. In the call mode, the mobile communication module 113 may convert the electrical sound data into data that can be readily transmitted to a mobile communication base station and then output the data obtained by the conversion. The microphone 123 may use various noise removal algorithms to remove noise that may be generated during the reception of external sound signals.

The user input unit 130 may generate key input data based on user input for controlling the operation of the mobile terminal 100. The user input unit 130 may be implemented as a keypad, a dome switch, a touch pad (either static pressure or constant electricity), a jog wheel, or a jog switch. In particular, if the user input unit 130 is implemented as a touch pad and forms a mutual layer structure together with the display unit 151, the user input unit 130 and the display unit 151 may be collectively referred to as a touch screen.

The sensing unit 140 determines a current state of the mobile terminal 100, such as whether the mobile terminal 100 is opened or closed, the position of the mobile terminal 100 and whether the mobile terminal 100 is placed in contact with a user, and generates a sensing signal for controlling the operation of the mobile terminal 100. For example, when the mobile terminal 100 is a slider-type mobile phone, the sensing unit 140 may determine whether the mobile terminal 100 is opened or closed. In addition, the sensing unit 140 may determine whether the mobile terminal 100 is powered by the power supply unit 190 and whether the interface unit 170 is connected to an external device.

The sensing unit 140 may include a proximity sensor 141, a pressure sensor 143, and an acceleration sensor 145. The proximity sensor 141 may determine whether there is an entity nearby and approaching the mobile terminal 100 without any mechanical contact with the entity. More specifically, the proximity sensor 141 may detect an entity that is nearby and approaching by detecting a change in an alternating magnetic field or the rate of change of static capacitance. The sensing unit 140 may include two or more proximity sensors 141.

The pressure sensor 143 may determine whether pressure is being applied to the mobile terminal 100 and may detect the magnitude of pressure applied to the mobile terminal 100. The pressure sensor 143 may be installed in a portion of the mobile terminal 100 in which the detection of pressure is necessary.

For example, the pressure sensor 143 may be installed in the display unit 151. In this case, the display unit 151 may differentiate a typical touch input from a pressure touch input, which is generated by applying greater pressure than that used to generate a typical touch input, based on a signal output by the pressure sensor 143. In addition, it is possible to determine the magnitude of pressure applied to the display unit 151 upon receiving a pressure touch input based on the signal output by the pressure sensor 143.

Acceleration sensors are a type of device for converting an acceleration variation into an electric signal. With recent developments in micro-electromechanical system (MEMS) technology, acceleration sensors have been widely used in various products for various purposes.

For example, an acceleration sensor may be installed in an airbag system for an automobile and may thus be used to detect collisions. Alternatively, an acceleration sensor may be used as an input device for a computer game and may sense the motion of the human hand during a computer game.

Two or three acceleration sensors 145 representing different axial directions may be installed in the mobile terminal 100. Alternatively, only one acceleration sensor 145 representing a Z axis may be installed in the mobile terminal 100.

The output unit 150 may output audio signals, video signals and alarm signals. The output unit 150 may include the display unit 151, an audio output module 153, an alarm unit 155, and a haptic module 157.

The display unit 151 may display various information processed by the mobile terminal 100. For example, if the mobile terminal 100 is in a call mode, the display unit 151 may display a user interface (UI) or a graphic user interface (GUI) for making or receiving a call. If the mobile terminal 100 is in a video call mode or an image capturing mode, the display unit 151 may display a UI or a GUI for capturing or receiving images.

If the display unit 151 and the user input unit 130 form a layer structure together and are thus implemented as a touch screen, the display unit 151 may be used as both an output device and an input device. If the display unit 151 is implemented as a touch screen, the display unit 151 may also include a touch screen panel and a touch screen panel controller.

The touch screen panel is a transparent panel attached onto the exterior of the mobile terminal 100 and may be connected to an internal bus of the mobile terminal 100. The touch screen panel keeps monitoring whether the touch screen panel is being touched by a user.

Once a touch input to the touch screen panel is detected, the touch screen panel transmits a number of signals corresponding to the touch input to the touch screen panel controller. The touch screen panel controller processes the signals transmitted by the touch screen panel, and transmits the processed signals to the controller 180. Then, the controller 180 determines whether a touch input has been generated and which part of the touch screen panel has been touched based on the processed signals transmitted by the touch screen panel controller.

The display unit 151 may include electronic paper (e-paper). E-paper is a type of reflective display technology and can provide as high resolution as ordinary ink on paper, wide viewing angles, and excellent visual properties.

E-paper may be implemented on any type of substrate, such as a plastic, metallic or paper substrate, and may maintain an image displayed thereon even when power is cut off. In addition, e-paper may be able to reduce the power consumption of the mobile terminal 100 because it does not require a backlight assembly.

The display unit 151 may be implemented as e-paper by using electrostatic-charged hemispherical twist balls, electrophoretic deposition, or microcapsules. Forms of electronic media, such as these and any similar technologies, will be collectively referred to as "electronic paper" throughout the remainder of this disclosure.

Electronic paper technologies generally require that power be applied to generate the electric field for creating or altering the image shown on the visual display. The generated image may be static until another electric field is applied. This reduced, intermittent power requirement is beneficial for use in disclosed embodiments discussed below. As will be appreciated by one of skill in the art, media incorporating material that can be magnetically manipulated in similar manner as the electronic paper described above can also be used as the updateable visual display as discussed herein.

As described above, if the display unit 151 and the user input unit 130 form a layer structure and are thus implemented as a touch screen, the display unit 151 may be used as an output device and as an input device. The display unit 151 may include at least one of a liquid crystal display (LCD), a thin film transistor (TFT)-LCD, an organic light-emitting diode (OLED), a flexible display, and a three-dimensional (3D) display. The mobile terminal 100 may include two or more display units 151. For example, the mobile terminal 100 may include an external display unit (not shown) and an internal display unit (not shown).

The audio output module 153 may output audio data received by the wireless communication unit 110 during a call reception mode, a call mode, a recording mode, a voice recognition mode, or a broadcast reception mode, or may output audio data present in the memory 160. In addition, the audio output module 153 may output various sound signals associated with the functions of the mobile terminal 100, such as receiving a call or a message. The audio output module 153 may include a speaker and a buzzer.

The alarm unit 155 may output an alarm signal indicating the occurrence of an event in the mobile terminal 100. Examples of the event include receiving a call signal, receiving a message, and receiving a key signal. Examples of the alarm signal output by the alarm unit 155 include an audio signal, a video signal and a vibration signal.

More specifically, the alarm unit 155 may output a signal upon receiving a call signal or a message. In addition, the alarm unit 155 may receive a key signal and may output a signal as feedback to the key signal. Once a signal is output by the alarm unit 155, the user may recognize that an event has occurred. An alarm signal for notifying the user of the occurrence of an event may be output by the display unit 151 and/or the audio output module 153.

The haptic module 157 may provide various haptic effects (such as vibrations) that can be perceived by the user. If the haptic module 157 generates vibration as a haptic effect, the intensity and the pattern of vibration generated by the haptic module 157 may be altered in various manners. The haptic module 157 may synthesize different vibration effects and may output the result of the synthesization. Alternatively, the haptic module 157 may sequentially output different vibration effects.

The haptic module 157 may provide various haptic effects, other than vibration, such as a haptic effect obtained using a pin array that moves perpendicularly to a contact skin surface, a haptic effect obtained by injecting or sucking in air through an injection hole or a suction hole, a haptic effect obtained by giving a stimulus to the surface of the skin, a haptic effect obtained through contact with an electrode, a haptic effect obtained using an electrostatic force, and a haptic effect obtained by realizing the sense of heat or cold using a device capable of absorbing heat or generating heat. The haptic module 157 may be configured to enable the user to recognize a haptic effect using the kinesthetic sense of the fingers or the arms. The mobile terminal 100 may include two or more haptic modules 157.

The memory 160 may store various programs necessary for the operation of the controller 180. In addition, the memory 160 may temporarily store various data, such as a phonebook, messages, still images, or moving images.

The memory 160 may include at least one of a flash memory type storage medium, a hard disk type storage medium, a multimedia card micro type storage medium, a card type memory (e.g., a secure digital (SD) or extreme digital (XD) memory), a random access memory (RAM), and/or a read-only memory (ROM). The mobile terminal 100 may operate a web storage, which performs the functions of the memory 160 on the Internet.

The interface unit 170 may interface with an external device that can be connected to the mobile terminal 100. The interface unit 170 may be a wired/wireless headset, an external battery charger, a wired/wireless data port, a card socket for, for example, a memory card, a subscriber identification module (SIM) card or a user identity module (UIM) card, an audio input/output (I/O) terminal, a video I/O terminal, or an earphone.

The interface unit 170 may receive data from an external device or may be powered by an external device. The interface unit 170 may transmit data provided by an external device to other components in the mobile terminal 100 or may transmit data provided by other components in the mobile terminal 100 to an external device.

If the mobile terminal 100 is connected to an external cradle, power may be supplied from the external cradle to the mobile terminal through the interface unit 170. Various command signals may be transmitted from the external cradle to the mobile terminal through the interface unit 170.

The controller 180 may control the general operation of the mobile terminal 100. For example, the controller 180 may perform various control operations regarding making/receiving a voice call, transmitting/receiving data, or making/receiving a video call.

The controller 180 may include a multimedia play module 181, which plays multimedia data. The multimedia play module 181 may be implemented as a hardware device and may be installed in the controller 180. Alternatively, the multimedia play module 181 may be implemented as a software program.

The power supply unit 190 is supplied with power by an external power source or an internal power source and supplies power to other components in the mobile terminal 100.

The mobile terminal 100 may include a wired/wireless communication system and a satellite-based communication system. The mobile terminal 100 may be configured to operate in a communication system transmitting data as frames or packets.

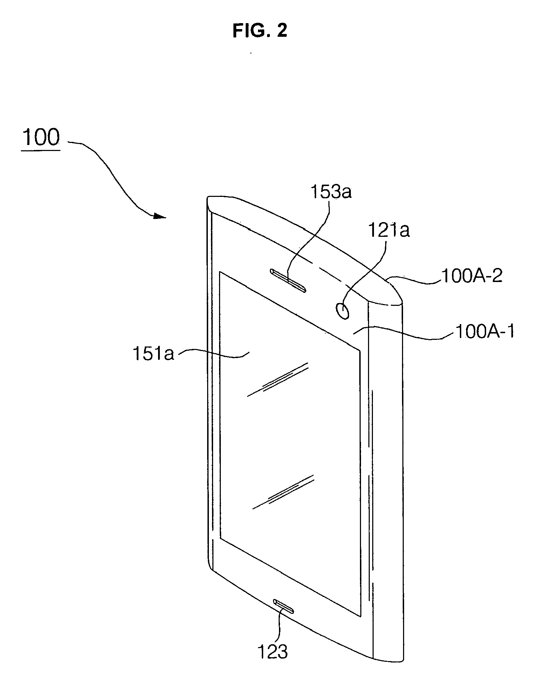

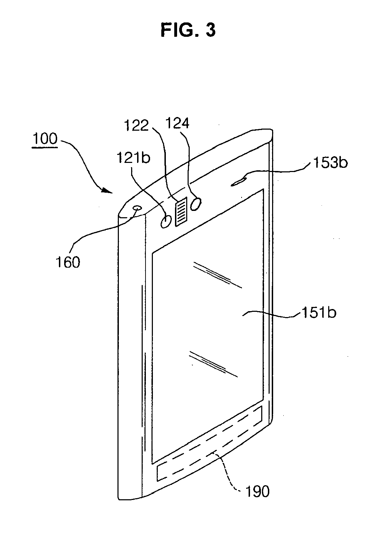

The exterior of the mobile terminal 100 will hereinafter be described in detail with reference to FIGS. 2 and 3. For convenience, it is assumed that the mobile terminal 100 is a bar-type mobile phone. However, the present invention is not restricted to a bar-type mobile phone. Rather, the present invention can be applied to various mobile phones, other than a bar-type mobile phone, for example, a folder-type mobile phone, a swing-type mobile phone, and a slider-type mobile phone.

FIG. 2 illustrates a front perspective view of the mobile terminal 100 shown in FIG. 1. Referring to FIG. 2, the exterior of the mobile terminal 100 may be defined by a front case 100A-1 and a rear case 100A-2. Various electronic products may be installed in the empty space between the front case 100A-1 and the rear case 100A-2. At least one intermediate case may be additionally disposed between the front case 100A-1 and the rear case 100A-2.

The front case 100A-1 and the rear case 100A-2 may be formed of a synthetic resin through injection molding. Alternatively, the front case 100A-1 and the rear case 100A-2 may be formed of a metal, such as stainless steel (STS) or titanium (Ti).

A first display, such as a first display unit 151a, a first audio output module 153a, a first camera 121a and a user input unit (not shown) may be disposed in the front case 100A-1. The first display unit 151a and a second display, such as a second display unit 151b, may be LCDs, OLEDs or e-paper that can visualize information.

Since a touch pad is configured to overlap the first and second display units 151a and 151 b and thus to realize a layer structure, the first and second display units 151a and 151b may serve as touch screens. Thus, it is possible for a user to input information to the first and second display units 151a and 151b simply by touching the first and second display units 151a and 151b.

The first audio output module 153a may be implemented as a receiver or a speaker. The first camera 121a may be configured to capture a still image or a moving image of a user. The microphone 123 may be configured to properly receive the voice of a user or other sounds.

The user input unit 130 may adopt various manipulation methods as long as it can offer tactile feedback to a user. For example, the user input unit 130 may be implemented as a dome switch or a touch pad that receives a command or information upon being pushed or touched by a user. Alternatively, the user input unit may be implemented as a wheel, a jog dial, or a joystick.

The user input unit 130 may allow a user to input such commands as "start," "end," and "scroll" and to choose an operating mode. The user input unit 130 may also serve as a hot key for activating certain functions of the mobile terminal 100.

FIG. 3 illustrates a rear perspective view of the mobile terminal 100 shown in FIG. 2. Referring to FIG. 3, an interface unit 170 (not shown) may be disposed in the rear case 100A-2. A second camera 121b may be disposed at the rear of the rear case 100A-2.

The second camera 121b may have a different photographing direction from that of the first camera 121a shown in FIG. 2. In addition, the number of pixels of the second camera 121b may be different from the number of pixels of the first camera 121a.

For example, the first camera 121a may be used to capture an image of the face of a user and then readily transmit the captured image during a video call. Thus, a low-pixel camera may be used as the first camera 121a.

The second camera 121b may be used to capture an image of an ordinary subject. Given that images captured by the second camera 121b generally do not need to be transmitted, a high-pixel camera may be used as the second camera 121b.

A camera flash 122 and a mirror 124 may be disposed near the second camera 121 b. The user may look in the mirror 124 for taking a self shot. The camera flash 122 may illuminate a subject when the second camera 121b captures an image of the subject.

A second audio output module 153b may be additionally provided in the rear case 100A-2. The second audio output module 153b may realize a stereo function along with the first audio output module 153a. The second audio output module 153b may also be used during a speaker-phone mode.

An antenna 160for receiving a broadcast signal may be disposed on one side of the rear case 100A-2. The antenna 160 may be installed such that it can be pulled out of the rear case 100A-2.

The interface unit 170 may serve as a path for allowing the mobile terminal 100 to exchange data with an external device. For example, the interface unit 170 may be a connection terminal for connecting an earphone to the mobile terminal 100 in a wired or wireless manner, a port for short-range communication or a power supply terminal for supplying operating power to the mobile terminal 100.

The interface unit 170 may be a SIM or a UIM. The interface unit 170 may also be a card socket for an exterior-type card, such as a memory card for storing data.

A power supply unit 190 may be disposed in the rear case 100A-2. The power supply unit 190 may be a rechargeable battery and may be coupled to the rear case 100A-2 such that it is attachable to or detachable from the rear case 100A-2.

The second camera 121b is illustrated in FIG. 3 as being disposed in the rear case 100A-2, but the present invention is not restricted to this. The first camera 121a may be able to rotate and thus to cover the photographing direction of the second camera 121b. In this case, the second camera 121b may be optional.

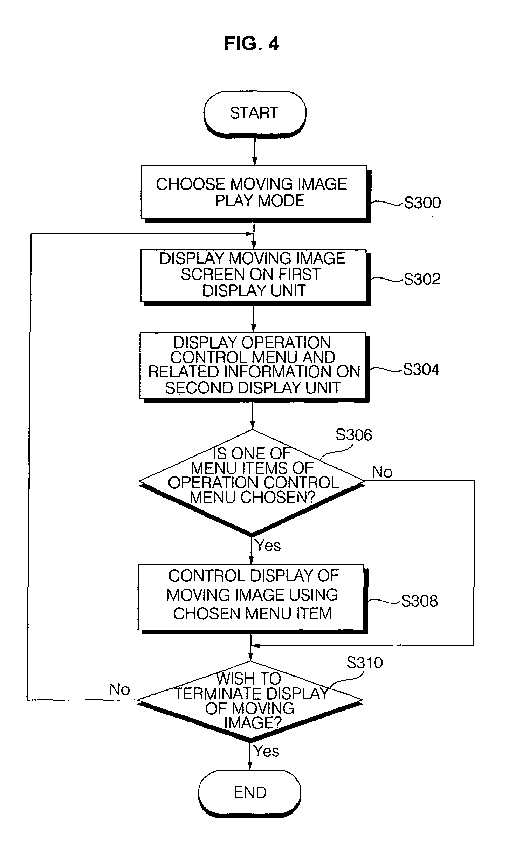

FIG. 4 illustrates a flowchart of a method of controlling the operation of a mobile terminal according to a first exemplary embodiment of the present invention. In exemplary embodiments of the present invention, the first display unit 151a may be a touch screen, and the second display unit 151b may be e-paper.

E-paper can provide as high resolution as ordinary ink on paper, wide viewing angles, and excellent visual properties. E-paper can maintain an image displayed thereon even when power is cut off.

The mobile terminal 100 may selectively utilize the first display unit 151a and the second display unit 100b according to the type of environment in which the mobile terminal 100 operates. The first display unit 151a is capable of displaying a color image. The second display unit 151b, which displays a black-and-white image, is capable of maintaining an image displayed thereon and consumes less power than the first display unit 151a. In addition, the mobile terminal 100 may perform the functions of a double-sided display using the first display unit 151a disposed at the front case 100A-1 of the main body of the mobile terminal 100 and the second display unit 151b disposed at the rear case 100A-2 of the main body of the mobile terminal 100.

With continued reference to FIG. 4, if a moving image play mode for, for example, playing a multimedia file or a digital broadcast program, is chosen in response to a user command (S300), the controller 180 may play a moving image chosen by a user and may thus display a moving image screen on the first display unit 151a (S302). Thereafter, the controller 180 may display an operation control menu for controlling the moving image screen and information regarding the operation control menu on the second display unit 151b (S304).

If one of a plurality of menu items of the operation control menu is chosen (S306), the controller 180 may control the chosen moving image using the chosen menu item (S308). If an event, such as the reception of a call request or the reception of a message, occurs when the moving image screen is displayed on the first display unit 151a, the controller 180 may also display information regarding the event on the second display unit 151b. Operations S302 through S308 may be performed repeatedly until the user chooses to terminate the play of the chosen moving image (S310).

In this manner, it is possible to improve the spatial efficiency of the first display unit 151a by displaying only a moving image screen on the first display unit 151a. Therefore, if the first display unit 151a is turned off, it is possible to display various information on the second display unit 151b.

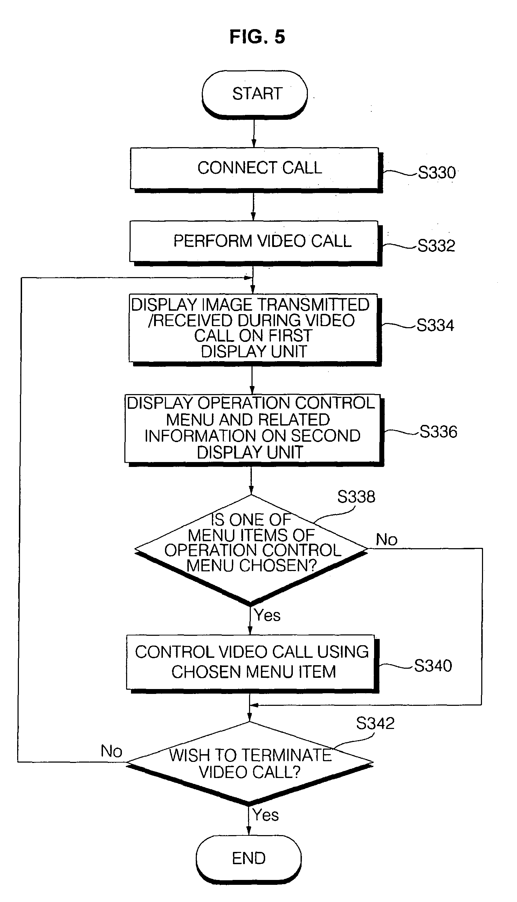

FIG. 5 illustrates a flowchart of a method of controlling the operation of a mobile terminal according to a second exemplary embodiment of the present invention. More specifically, FIG. 5 illustrates how to control the operation of the mobile terminal 100 during a video call by using the first and second display units 151a and 151b.

With continued reference to FIG. 5, if a phone number of a callee's mobile terminal is received and a request for making a video call to the callee is issued, the controller 180 may control the wireless communication unit 110 to connect a call to the callee's mobile terminal at the received phone number (S330) and may thus perform a video call together with the callee's mobile terminal (S332). During the video call, the controller 180 may display an image received from the callee's mobile terminal during the video call, such as the callee's image, and an image transmitted to the callee's mobile terminal during the video call, such as the user's image, on the first display unit 151a (S334). Audio data received from the callee's mobile terminal may be output from the audio output module 153.

Thereafter, the controller 180 may display information regarding an operation control menu for controlling a video call on the second display unit 151b (S336). If an event, such as the reception of another call request or the reception of a message, occurs during the video call, the controller 180 may also display information regarding the event on the second display unit 151b.

If one of a plurality of menu items of the operation control menu displayed in operation S336 is chosen (S338), the controller 180 may control the video call using the chosen menu item (S340). Operations S334 through S340 may be performed repeatedly until the user chooses to terminate the video call (S342). In this manner, it is possible to effectively control a video call using the first and second display units 151a and 151b.

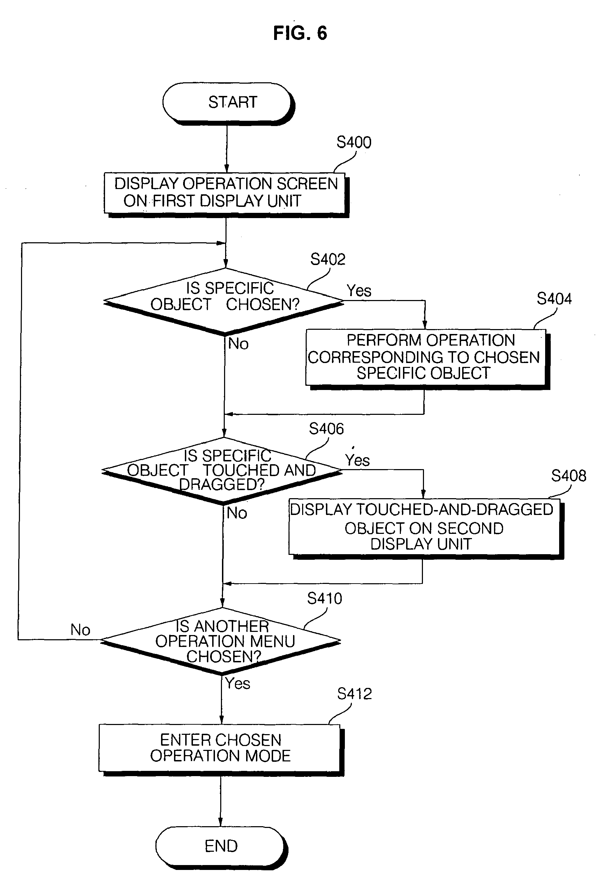

FIG. 6 illustrates a flowchart of a method of controlling the operation of a mobile terminal according to a third exemplary embodiment of the present invention. Referring to FIG. 6, the controller 180 may display an operation screen corresponding to a menu chosen by the user on the first display unit 151a (S400). Thereafter, the controller 180 may determine whether one of at least one objects displayed on the operation screen has been touched and thus chosen by the user (S402).

The objects displayed on the operation screen may be menu icons, control icons, touch keys or images or menu items for controlling the operation of the mobile terminal 100. Each of the at least one objects is separately associated with one of a plurality of different operational functions of the mobile terminal.

If it is determined in operation S402 that a specific one of the at least one objects displayed on the operation screen has been touched and chosen, the controller 180 may control an operation corresponding to the chosen specific object to be performed (S404). The chosen specific item may be displayed differently from other of the at least one objects and may thus be easily distinguishable from the other objects. Alternatively, a haptic effect, such as vibration, may be output for the chosen item.

If it is determined in operation S402 that none of the objects displayed on the operation screen have been touched and chosen, the controller 180 may determine whether one of the at least one objects displayed on the operation screen has been touched and then dragged (S406). If it is determined in operation S406 that one of the at least one objects displayed on the operation screen has been touched and then dragged to the edge of the first display unit 15 1 a, the controller 180 may display the touched-and-dragged object on the second display unit 151 b (S408).

More specifically, the touched-and-dragged object may be displayed on the entire second display unit 151b. Moreover, when the touched-and-dragged object is displayed on the second display unit 151b, the touched-and-dragged object may cease to be displayed on the first display unit 151a.

Operations S402 through S408 may be performed repeatedly until another operation mode is chosen by the user (S410). If another operation mode is chosen, the controller 180 may place the mobile terminal 100 in the chosen operation mode (S412). In this manner, it is possible to continuously display various objects even in the event of a power cut by quickly moving the objects from the first display unit 151a to the second display unit 151b.

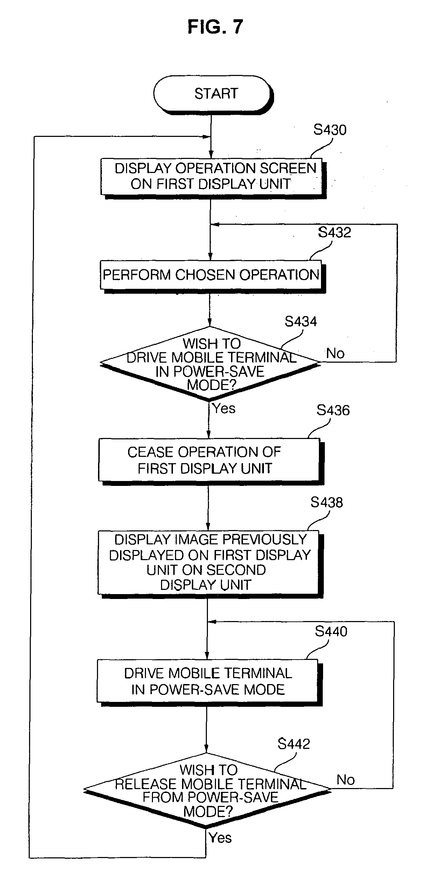

FIG. 7 illustrates a flowchart of a method of controlling the operation of a mobile terminal according to a fourth exemplary embodiment of the present invention. More specifically, FIG. 7 illustrates how to control the operation of the mobile terminal 100 during a power-save mode using the first and second display units 151a and 151b.

Referring to FIG. 7, the controller 180 may display an operation screen corresponding to a menu chosen by the user on the first display unit 151a (S430). Thereafter, the controller 180 may control an operation chosen by the user to be performed (S432) and may determine whether to drive the mobile terminal 100 in the power-save mode (S434).

When the mobile terminal is placed into a power-save mode, the operation of the first display unit 151a may be ceased, or turned off, if no touch or key input is received for more than a predefined amount of time. Then, the first display unit 151a may be turned back on in response to a touch or key input received through the first display unit 151a or the user input unit 130, which releases the mobile terminal from the power-save mode.

If it is determined in operation S434 to drive the mobile terminal 100 in the power-save mode, the controller 180 may cease the operation of the first display unit 151a (S436). The controller 180 may display the at least one object of the operation screen previously displayed on the first display unit 151a on the second display unit 151b (S438).

Thereafter, the controller 180 may drive the mobile terminal 100 in the power-save mode (S440). The mobile terminal 100 may be continuously driven in the power-save mode until the user releases the mobile terminal 100 from the power-save mode (S442). If the user releases the mobile terminal 100 from the power-save mode, the method returns to operation S430.

In this manner, it is possible to continuously display an image even when the first display unit 151a is turned off, by displaying the image on the second display unit 151b, which is not turned off even during the power-save mode. In this manner, the image is stored on the second display unit 151b during the power-save mode.

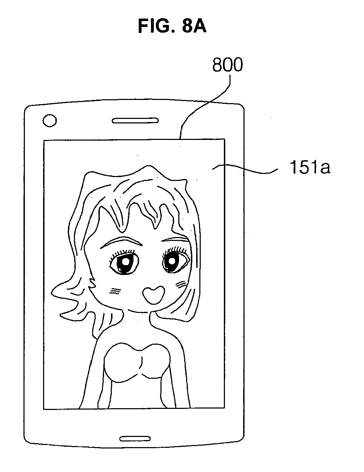

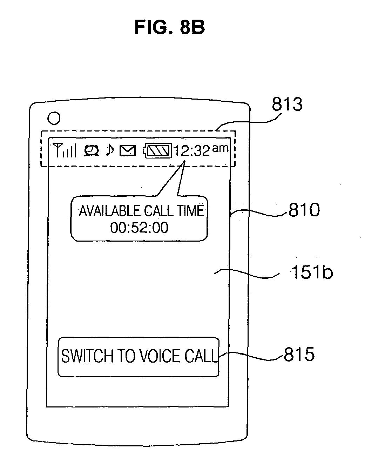

FIGS. 8 through 11 illustrate diagrams for explaining the methods of the first through fourth exemplary embodiments.

Referring to FIG. 8A, during a video call with a caller/callee, the caller/callee's image 800 may be displayed on the first display unit 151a. More specifically, the user may choose one of an image (such as the user's image) transmitted to the caller/callee's mobile terminal during the video call, an image (such as the caller/callee's image) received from the caller/callee's mobile terminal during the video call or a replacement image that can be transmitted to the caller/callee's mobile terminal instead of the user's image 800 on an entire video call screen.

Thereafter, referring to FIG. 8B, information regarding an operation control menu for controlling a video call may be displayed on the second display unit 151b. More specifically, a plurality of indicator icons 813 indicating, for example, received signal intensity, remaining battery power, and current time information, available call time information indicating the maximum amount of time for which the video call with the caller/callee can continue with the remaining battery power, and a menu item 815 for switching the mobile terminal 100 from a video call to a voice call may be displayed on the second display unit 151b. In addition, various other menu items of the operation control menu for controlling a video call, such as those for controlling sound volume, sending the replacement image, or performing a video chat, may also be displayed on the second display unit 151b.

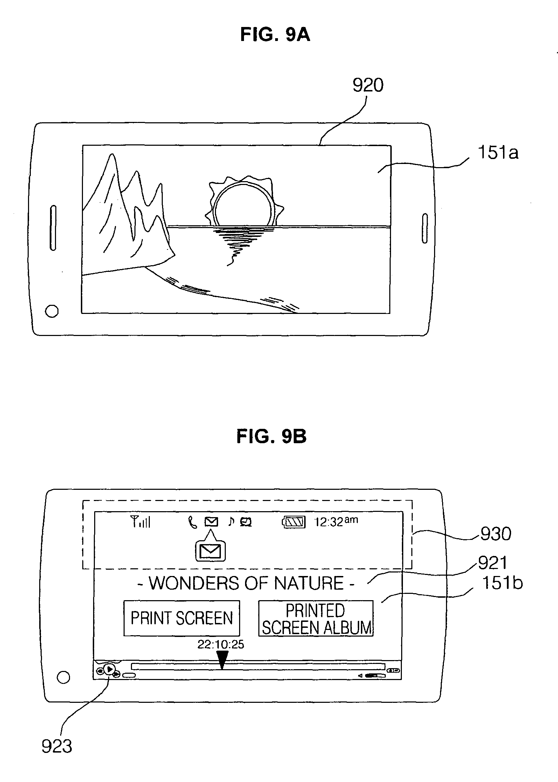

Referring to FIG. 9A, a moving image screen may be displayed on the first display unit 151a. Then, information regarding a moving image 920 currently being displayed on the moving image screen and an operation control menu for controlling the display of a moving image 920 may be displayed on the second display unit 151b, as shown in FIG. 9B.

More specifically, referring to FIG. 9B, a plurality of indicator icons 930, information 921 regarding the moving image 920, such as the title of the moving image, and a plurality of menu items 923 of the operation control menu for controlling the display of a moving image may be displayed on the second display unit 151b. The menu items 923 may be set in response to a user command.

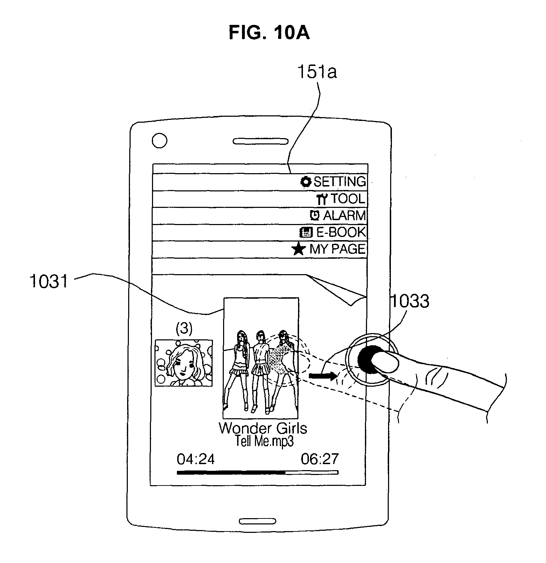

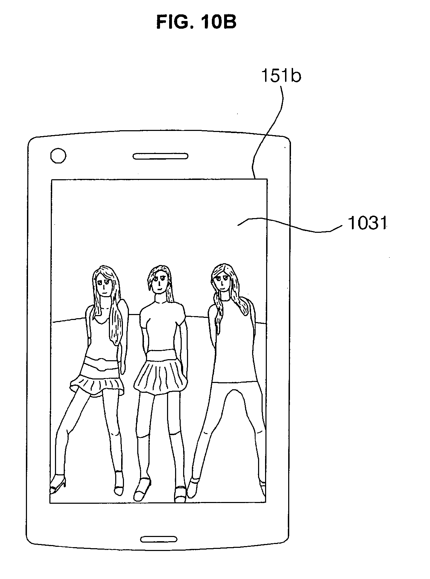

Referring to FIG. 10A, a multimedia play screen may be displayed on the first display unit 151a. In this case, if one of a plurality of objects displayed on the multimedia play screen, e.g., an object 1031, is touched and then dragged to an edge of the first display unit 151a, as indicated by reference numeral 1033, the object 1031 may be displayed on the entire second display unit 151b, as shown in FIG. 10B. Then, the object 1031 may be used as a background screen or may be stored as a file for later use for various purposes.

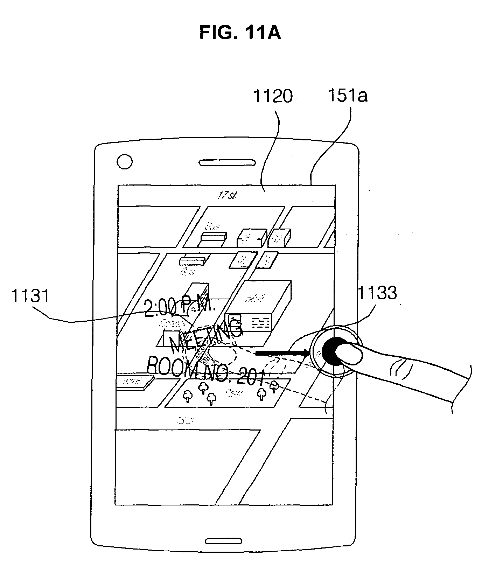

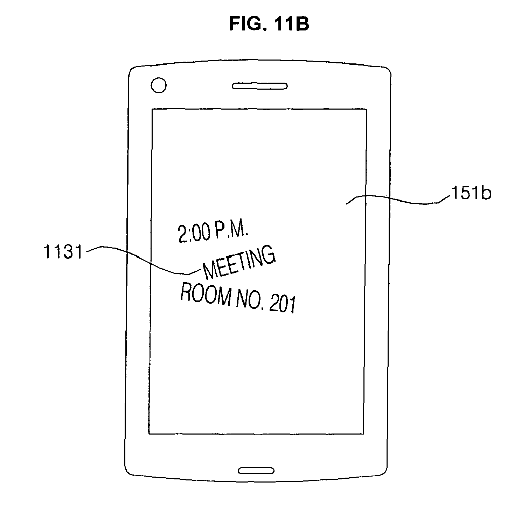

Referring to FIG. 11A, a map screen 1120 may be displayed on the first display unit 151a. In this case, if an object 1131, such as a memo displayed on the map screen 1120, is touched and then dragged to an edge of the first display unit 151a, as indicated by reference numeral 1133, the touched-and-dragged object 1131 may be displayed on the entire second display unit 151b, as shown in FIG. 11B.

In this manner, the touched-and-dragged object 1131 may be continuously displayed regardless of whether the first display unit 151a is turned off, and may thus be able to be used for various purposes.

In short, the first and second display units 151a and 151b on the front case 100 A1 and the rear case 100A-2, respectively, of the mobile terminal 100 may be used to control various operations performed by the mobile terminal 100. The mobile terminal 100 and the method of controlling the operation of a mobile terminal are not restricted to the exemplary embodiments set forth herein. Rather, variations and combinations of the exemplary embodiments set forth herein may fall within the scope of the present invention.

The present invention can be realized as code that can be read by a processor (such as a mobile station modem (MSM)) included in a mobile terminal and that can be written on a computer-readable recording medium. The computer-readable recording medium may be any type of recording device in which data is stored in a computer-readable manner.

Examples of the computer-readable recording medium include a ROM, a RAM, a CD-ROM, a magnetic tape, a floppy disc, an optical data storage, and a carrier wave (e.g., data transmission through the Internet). The computer-readable recording medium can be distributed over a plurality of computer systems connected to a network so that computer-readable code is written thereto and executed therefrom in a decentralized manner. Functional programs, code, and code segments needed for realizing the present invention can be easily construed by one of ordinary skill in the art.

Accordingly, it is possible to continuously display an object even in the event of a power cut by quickly moving the object from a touch screen at the front of the main body of a mobile terminal to e-paper displayed at the rear of the main body of the mobile terminal. In addition, the e-paper is not turned off during the power-save mode, whereas the touch screen is turned off during a power-save mode. Therefore, it is possible to improve the power efficiency of the mobile terminal and maximize user convenience by displaying an image previously displayed on the touch screen on the e-paper.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of controlling a mobile terminal, comprising:
displaying an image on a first display of the mobile terminal;
displaying at least one object on the first display of the mobile terminal, the at least one object relating to an operational function of the mobile terminal;
touching and dragging one of the at least one object on the first display to an edge of the first display;
displaying the touched and dragged object on a second display of the mobile terminal; and
ceasing to display the touched and dragged object on the first display of the mobile terminal.

2. The method of claim 1, wherein the first display comprises a touch screen display and the second display comprises electronic paper, the object displayed on the second display being static in the absence of an electric field being applied to the second display.

3. The method of claim 1 or 2, wherein each of the at least one object is separately associated with one of a plurality of different operational functions of the mobile terminal and comprises a menu icon, a control icon, a touch key, an image or a menu item.

4. The method of claim 3, further comprising performing an operational function corresponding to a specific one of the at least one object.

5. The method of claim 4, wherein the specific one of the at least one object is displayed differently from other of the at least one object.

6. The method of any one preceding claim, wherein the touched-and-dragged object is displayed on the entire second display.

7. The method of any one preceding claim, further comprising storing the object displayed on the second display during a power-save mode of the mobile terminal.

8. The method of any one preceding claim, wherein the first display is positioned on a first side of a main body of the mobile terminal and the second display is positioned on a second side of the main body of the mobile terminal.

9. The method of any one preceding claim, further comprising:
placing the mobile terminal into a power-save mode;
ceasing the operation of the first display during the power-save mode; and
displaying the at least one object on the second display during the power-save mode.

10. The method of claim 9, further comprising:
releasing the mobile terminal from the power-save mode; and
displaying the at least one object on the first display.

11. A mobile terminal comprising:
a main body;
a first display disposed on a first surface of the main body and configured to display an image and at least one object, the at least one object relating to an operational function of the mobile terminal;
a second display disposed on a second surface of the main body; and
a controller configured to display one of the at least one object on the second display in response to the one of the at least one object being touched-and-dragged to an edge of the first display.

12. The mobile terminal of claim 11, wherein the first display comprises a touch screen and the second display comprises electronic paper, the touched-and-dragged object displayed on the second display being static in the absence of an electric field being applied to the second display.

13. The mobile terminal of claim 11 or 12, wherein each of the at least one object is separately associated with one of a plurality of different operational functions of the mobile terminal and comprises a menu icon, a control icon, a touch key, an image or a menu item.

14. The mobile terminal of any one of claims 11 to 13, wherein the controller is further configured to effect at least one of:
performing an operation corresponding to a specific one of the at least one object and preferably displaying the specific one of the at least one object differently from other of the at least one object;
displaying the touched-and-dragged object on the entire second display;
storing the object displayed on the second display during a power-save mode of the mobile terminal; and
terminating the operation of the first display, displaying the at least one object on the second display upon the mobile terminal entering a power-save mode, and preferably displaying the at least one object on the first display upon release of the mobile terminal from the power-save mode.

15. The method of any one of claims 11 to 14, wherein the first display is positioned on a first side of a main body of the mobile terminal and the second display is positioned on a second side, opposite the first side, of the main body of the mobile terminal.
